**Europäisches Patentamt**

(19) **European Patent Office**

**Office européen des brevets**

(11) Publication number: **0 060 638**

**B1**

(12) # EUROPEAN PATENT SPECIFICATION

(45) Date of publication of patent specification: **10.09.86**

(21) Application number: **82301009.5**

(22) Date of filing: **26.02.82**

(51) Int. Cl.⁴: **B 23 Q 3/157**

(54) **Automatic tool changing system for machine tools.**

(30) Priority: **16.03.81 JP 37478/81**

(43) Date of publication of application:
**22.09.82 Bulletin 82/38**

(45) Publication of the grant of the patent:
**10.09.86 Bulletin 86/37**

(84) Designated Contracting States:
**BE DE FR GB IT NL SE**

(56) References cited:
**DE-A-2 641 523
FR-A-1 389 246
FR-A-1 444 093
FR-A-2 429 645
FR-E- 89 602
GB-A-1 408 131
US-A-3 973 863
US-A-4 000 954**

(73) Proprietor: **KITAMURA KIKAI KABUSHIKI
KAISHA (KITAMURA MACHINERY CO.,LTD.)
1870 Toide-Komyoji
Takaoka-shi Toyama-ken (JP)**

(72) Inventor: **Kitamura, Koichiro
3-11-5 Ekinan
Takaoka-shi Toyama-ken (JP)**

(74) Representative: **Wood, Anthony Charles et al
c/o MICHAEL BURNSIDE & PARTNERS 2
Serjeants' Inn Fleet Street
London EC4Y 1HL (GB)**

Courier Press, Leamington Spa, England.

## Description

The present invention relates to an automatic tool changing system for machine tools such as NC milling machines equipped for example with automatic tool changers (hereinafter referred to as machining centers).

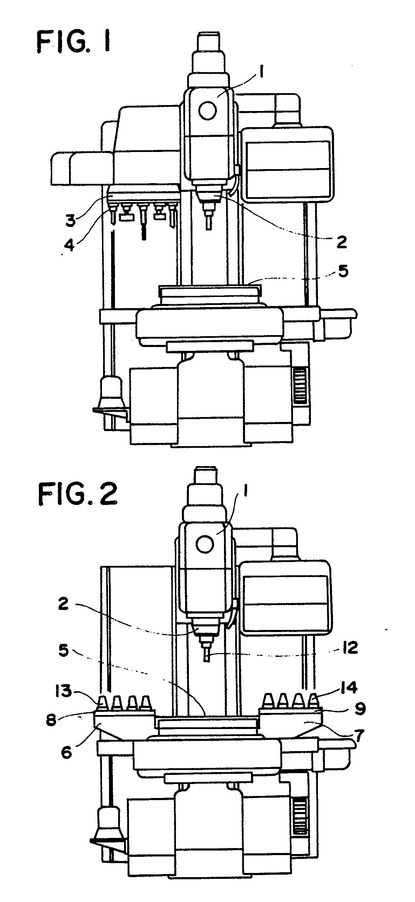

Many different types of automatic tool changing systems (hereinafter referred to as ATC systems) for vertical machining centers have been practiced and these systems are mostly such that as shown in Fig. 1, a tool magazine 3 is arranged in the upper part of the machining center or on each side or on one side of a frame 1 and a tool holder 4 is engaged with a spindle 2 by means of an arm. Alternatively, the tool holder is engaged with the spindle directly from the tool magazine.

With these known ATC systems, the weight of the tool magazine 3 is applied directly to the frame 1 and thus the accuracy of the frame 1 tends to be deteriorated with the resulting deterioration in the machining accuracy of a work. Another disadvantage is that the tool magazine is arranged high to face downwardly or obiquely so that the operator is fatigued with the operation of engaging and disengaging the large number of tool holders 4 with the tool magazine 3 and the operation also involves danger to the operator.

GB—A—1408131 describes a machine tool provided with automatic tool changing apparatus, comprising:

a spindle rotatably supported by a frame;

said spindle being adapted to receive and engage a rotatable machining tool;

a work table;

a tool magazine arranged at one side of said work table and adapted to carry a plurality of such rotatable machining tools at tool locations spaced apart circumferentially relative to an axis extending parallel to the axis of rotation of said spindle;

said tool magazine being movable bodily relative to said spindle and being rotatable about its said axis to permit alignment of any one of said tool locations with the axis of rotation of said spindle to permit tool changing.

That is a horizontal spindle machine tool employing a carriage separate from the work table to carry the tool magazine, the tool magazine being rotatable about a horizontal axis and movable toward and away from the spindle. The weight distribution is not symmetrical and thus again the accuracy of the frame would tend to be reduced unless it were made more massive which would slow down the tool changing time.

It is the primary object of the present invention to provide an improved automatic tool changing apparatus for machine tools which overcomes the foregoing deficiencies of the prior art ATC systems and which is capable of quickly and safely effecting the tool change without any detrimental effect on the accuracy of the frame.

The present invention is characterized in that:

said frame is movable vertically;

said spindle axis extends vertically;

said work table is movable linearly along mutually perpendicular intersecting X and Y axes which extend in a horizontal plane perpendicular to the spindle axis;

said work table is elongate, has a centre and is positioned below said spindle;

first and second said tool magazines are provided and are mounted on opposite ends of the length of said work table for movement with said work table;

said axes of rotation of said tool magazines extend perpendicular to the plane defined by said X and Y axes and lie in a vertical plane which extends along the length of said work table and passes through the centre thereof;

said tool magazines each being rotatable clockwise and counter-clockwise about its respective axis of rotation;

said tool magazines each having a plurality of tool holder receptacles at said locations;

said receptacles being adapted to receive a tool holder which holds a downwardly facing said tool and which is adapted for reception and engagement by said spindle;

to permit positioning of any one of said receptacles at a position nearest to said centre of the work table by rotation of the respective magazine in the appropriate sense and alignment of any one of said receptacles with the spindle axis by such rotation of the respective magazine and horizontal movement of said table to then permit changing of tool holders by vertical movement of said frame.

It is known per se to provide a vertically movable frame, a vertically extending spindle axis, and a work table extending in a horizontal plane below the spindle.

An embodiment of the invention will now be described, by way of example, with reference to the accompanying drawings, in which:

Fig. 1 is a front view of an exemplary prior art machining centre.

Fig. 2 is a front view of a machining centre incorporating an ATC apparatus according to the present invention.

Fig. 3 is a plan view showing an embodiment of a table and tool magazines according to the ATC apparatus of this invention.

Fig. 4 is a front view of Fig. 3.

Figs. 5 and 6 are front views showing principal parts of the system, which are useful for explaining the tool changing operation according to the invention.

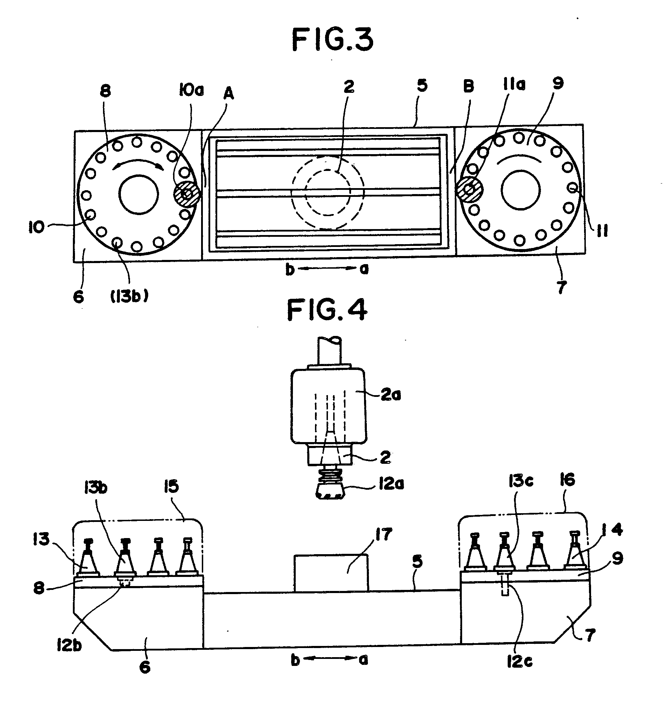

Referring to Fig. 2 showing an embodiment of the system of this invention, tool magazines 8 and 9 are provided on the sides of a table 5 or one of the tool magazines is provided on one side (in the illustrated case the tool magazines 8 and 9 are arranged on the sides of the table 5). More specifically, in the embodiment of Figs. 3 and 4, numeral 5 designates a table of a machining center, and 8 and 9 disk-shaped tool magazines respectively mounted on bases 6 and 7 which are arranged on the sides of the table 5. The tool magazines 8 and 9 are respectively provided with large numbers of tool receptacles 10 and 11 arranged at equal spaces and tools 12b and 12c, each mounted on a tool holder 13, are respectively received in the tool receptacles 10 and 11. The tool magazines 8 and 9 are each provided with a mechanism (e.g., a Geneva stop or a stop mechanism employing a pulse counter) so that they are rotated clockwise or counterclockwise for indexing and are respectively stopped at points A and B. Numerals 15 and 16 designate covers for the tool magazines 8 and 9, respectively, which are adapted to be opened and closed automatically. Numeral 2 designates a spindle supported by a frame 1 and adapted for vertical movement along the frame 1. Numeral 17 designates a work fixed in place on the table 5.

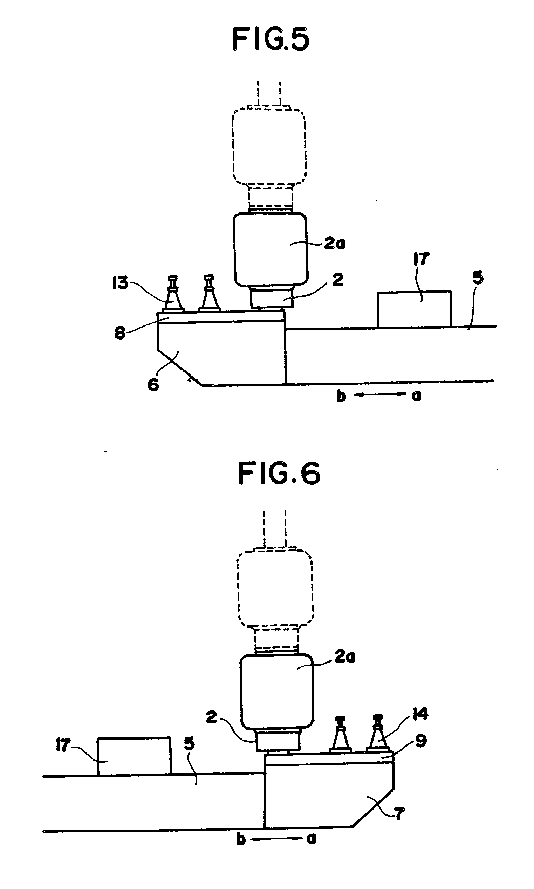

With the ATC system of this invention arranged as described above, its operation will now be described by way of example with reference to a case where a tool 12a (hereinafter referred to as a used tool) which is in engagement with the spindle 2 is returned to the tool magazine 8 and changed with another tool 12b (hereinafter referred to as a new tool) in reference to Fig. 5. Firstly, the spindle 2 is raised to separate it from the work 17 and the table 5 is moved in the direction of an arrow a. Also the tool magazine 8 is rotated in such a manner that any receptacle holding no tool 12 (e.g., 10a) is brought to a position below the spindle 2 or a point A and then, if necessary, the table 5 is subjected to fine adjustments in the X and Y directions so as to position the table 5 and thereby to align the center of the receptacle 10a with the center of the spindle 2. Then, the spindle 2 is lowered so that the used tool 12a engaging with the spindle 12 is transferred to the receptacle 10a of the tool magazine 8 and the spindle 2 is raised again. Then, the tool magazine 8 is rotated so that the tool holder (e.g. 13b) holding the new tool 12b is positioned below the spindle 2 and the table 5 is positioned in place. Thereafter, the spindle 2 is lowered to engage the new tool 12b with the spindle 2 and then the spindle 2 is raised again.

Then, the table 5 is moved in the direction of an arrow b until the work 17 is positioned below the spindle 2 and after the table 5 has been positioned the spindle 2 is lowered thus machining the work 17.

To change the tools of the tool magazine 9 on the right side of the table 5, it is only necessary to move the table 5 in the direction of the arrow b as shown in Fig. 6 and change the tools in the same manner as mentioned previously.

It is to be noted that each of the tool magazines 8 and 9 can be rotated either counterclockwise or clockwise for accommodating the used tool and engaging a new tool and therefore the tool changing time can be reduced by rotating the tool magazine 8 and 9 in a direction which is a short cut to the point A or B.

In accordance with this embodiment, about 15 seconds were required for raising and separating the spindle 2 from the work 17, moving the table 5 and rotating the tool magazine 8, returning the used tool 12a to the tool magazine 8 and raising the spindle 2, rotating the tool magazine 8 again and engaging the new tool 12b with the spindle 2 and then starting again the machining by the new tool 12b.

From the foregoing description it will be apparent that the present invention has the following remarkable advantages:

(1) The arrangement of a tool magazine on each side or on one side of the table prevents any detrimental effect on the frame and thus stabilizes the accuracy of machining.

(2) Since the tool magazine or magazines are arranged in the lower part of the machining center to look upward, the operation of accommodating the tools in the tool magazines is easy and safe.

(3) Since the tools are contained inside the tool magazines and not exposed to the outside, a very high degree of safety is ensured.

(4) Since the tool magazines are positioned low, the conditions of the tools can be observed under one's eyes.

(5) Since the tool changing position or positions are fixed, there is no need to move the table during tool changing and this prevents any wasteful movements.

(6) The required tool selecting program can be simplified.

(7) The arms for transferring the tool holders to the spindle and so on are eliminated with the resulting decrease in the tool changing time.

**Claim**

A machine tool provided with automatic tool changing apparatus, comprising:

a spindle 2 rotatably supported by a frame (1);

said spindle being adapted to receive and engage a rotatable machining tool (12);

a work table;

a tool magazine (8, 9) arranged at one side of said work table and adapted to carry a plurality of such rotatable machining tools (12) at tool locations (10, 11) spaced apart circumferentially relative to an axis extending parallel to the axis of rotation of said spindle;

said tool magazine (8, 9) being movable bodily relative to said spindle and being rotatable about its said axis to permit alignment of any one of said tool locations with the axis of rotation of said spindle (2) to permit tool changing;

characterised in that:

said frame (1) is movable vertically;

said spindle (2) axis extends vertically;

said work table (5) is movable linearly along mutually perpendicular intersecting X and Y axes which extend in a horizontal plane perpendicular to the spindle axis;

said work table (5) is elongate, has a centre and is positioned below said spindle (2);

first and second said tool magazines (8, 9) are provided and are mounted on opposite ends (6, 7) of the length of said work table (5) for movement with said work table;

said axes of rotation of said tool magazines (8, 9) extend perpendicular to the plane defined by said X and Y axes and lie in a vertical plane which extends along the length of said work table and passes through the centre thereof;

said tool magazines (8, 9) each being rotatable clockwise and counter-clockwise about its respective axis of rotation;

said tool magazines (8, 9) each having a plurality of tool holder receptacles (10, 11) at said locations;

said receptacles (10, 11) each being adapted to receive a tool holder (13) which holds a downwardly facing said tool (12) and which is adapted for reception and engagement by said spindle (2);

to permit positioning of any of said receptacles (10, 11) at any position nearest to said centre of the work table (5) by rotation of the respective magazine (8, 9) in the appropriate sense and alignment of any one of said receptacles (10, 11) with the spindle axis by such rotation of the respective magazine and horizontal movement of said table (5) to then permit changing of tool holders (13) by vertical movement of said frame (1).

**Patentanspruch**

Werkzeugmaschine mit einer autmatischen Werkzeugwechseleinrichtung, bei der vorgesehen sind

eine drehbar in einem Maschinenrahmen (1) gelagerte Spindel (2), die für die Aufnahme und den Eingriff eines drehbaren Bearbeitungswerkzeuges (12) ausgebildet ist,

ein Arbeitstisch (5) und

ein auf einer Seite des Arbeitstisches (5) angeordnetes Werkzeugmagazin (8, 9) für die Aufnahme mehrerer drehbarer Bearbeitungswerkzeuge (12) in Werkzeugstellungen, die bezüglich einer parallel zur Spindeldrehachse verlaufenden Achse in Umfangsrichtung beabstandet sind,

wobei das Werkzeugmagazin (8, 9) körperlich bezüglich der Spindel beweglich und um seine Achse mit Maßgabe drehbar ist, daß jede der Werkzeugstellungen auf die Spindeldrehachse für den Werkzeugwechsel ausrichtbar ist,

dadurch gekennzeichnet,

daß der Maschinenrahmen (1) vertikal beweglich ist,

daß sich die Achse der Spindel (2) vertikal erstreckt.

daß der Arbeitstisch (5) linear entlang sich gegenseitig rechtwinklig schneidender X- und X-Achsen beweglich ist, die einer horizontalen Ebene rechtwinklig zur Spindelachse verlaufen,

daß der langgestreckte Arbeitstisch (5) ein Zentrum aufweist und unterhalb der Spindel (2) angeordnet ist,

daß ein erstes und ein zweites, an den in Längsrichtung entgegengesetzten Enden (6, 7) des Arbeitstisches (5) angebrachtes Werkzeugmagazin (8, 9) mit dem Werktisch beweglich ist,

daß sich die Drehachsen der Werkzeugmagazine (8, 9) rechtwinklig zu der von der X- und Y-Achse gebildeten Ebene sowie in einer vertikalen Ebene erstrecken, die in der Längsrichtung des Arbeitstisches durch dessen Zentrum verläuft,

daß von den Werkzeugmagazinen (8, 9) jedes im Uhrzeigersinn und entgegengesetzt dazu um seine entsprechende Drehachse drehbar ist,

daß von den Werkzeugmagazinen (8, 9) jedes mehrere Werkzeughalteraufnahmen (10, 11) an den Werkzeugstellungen aufweist, und

daß von den Werkzeughalteraufnahmen (10, 11) jede für die Aufnahme eines Werkzeughalters ausgeführt ist, der ein nach unten weisendes Werkzeug (12) hält, und der die Aufnahme und den Eingriff der Spindel (2) gestattet, um eine der Werkzeughalteraufnahmen (10, 11) durch Drehung des entsprechenden Werkzeugmagazins (8, 9) im geeigneten Drehsinn auf eine Stellung einzustellen, die dem Zentrum des Arbeitstisches (5) am nächsten liegt, und um eine der Werkzeughalteraufnahmen (10, 11) durch Drehung des entsprechenden Werkzeugmagazins und Horizontalverschiebung des Arbeitstisches (5) auf die Spindelachse auszurichten und anschließend durch Vertikalbewegung des Maschinenrahmens (1) den Werkzeughalter (13) zu wechseln.

**Revendication**

Machine-outil équipée d'un mécanisme automatique de changement d'outil comprenant:

une broche (2) portée rotative par un bâti (1);

ladite broche étant adaptée pour recevoir et attaquer un outil d'usinage rotatif (12);

une table porte-pièces;

un magasin d'outils (8, 9) agencé d'un côté de ladite table porte-pièce et adapté pour porter une pluralité de tels outils d'usinage rotatifs (12) en des positions d'outils (10, 11) espacées circonférentiellement autour d'un axe qui s'étend paralèlement à l'axe de rotation de ladite broche;

ledit magasin, d'outils (8, 9) pouvant se déplacer comme un seul bloc par rapport à ladite broche et pouvant tourner autour dudit axe pour permettre d'aligner l'une quelconque desdites positions d'outils avec l'axe de rotation de ladite broche (2) pour permettre le changement d'outil.

caractérisée en ce que:

ledit bâti (1) est mobile dans la direction verticale;

l'axe de ladite broche (2) s'étend verticalement;

ladite table porte-pièce (5) peut se déplacer linéairement le long d'axes X et Y qui se croisent mutuellement à angle droit et qui s'étendent dans un plan horizontal perpendiculaire à l'axe de la broche;

ladite table porte-pièce (5) est de forme allongée, possède un centre et est positionnée sous ladite broche (2);

un premier et un deuxième magasins d'outils sont prévus et montés aux extrémités opposées (6, 7) de la longueur de ladite table porte-pièce (5) pour se déplacer avec ladite table porte-pièce;

lesdits axes de rotation desdits magasins d'outils (8, 9) s'étendent perpendiculairement au plan défini par lesdits axes X et y et se trouvent dans un plan vertical qui s'étend suivant la longueur de ladite table porte-pièce et passe par le centre de celle-ci;

chacun desdits magasins d'outils (8, 9) pouvant tourner dans le sens des aiguilles d'une montre et dans le sens inverse de celui des aiguilles d'une montre autour de son axe de rotation respectif;

lesdits magasins d'outils (8, 9) ayant chacun une pluralité de réceptacles de porte-outils dans lesdites positions;

lesdits réceptacles (10, 11) étant adaptés chacun pour recevoir une porte-outil (13) qui tient un dit outil (12) dirigé vers le bas et qui est adapté pour être reçu et attaqué par ladite broche (2);

pour permettre le positionnement de l'un quelconque desdits réceptacles (10, 11) en une position la plus rapprochée dudit centre de la table porte-pièce (5) par rotation du magasin (8, 9) correspondant dans le sens approprié et l'alignement de l'un quelconque desdits réceptacles (10, 11) avec l'axe de la broche par cette rotation du magasin correspondant et déplacement horizontal de ladite table (5) pour permettre ensuite le changement des porte-outils par déplacement vertical dudit bâti (1).

**FIG. 1**

**FIG. 2**

# FIG.3

# FIG.4

# FIG.5

# FIG.6